# FASCICULE DE BREVET EUROPEEN

(11) **EP 3 126 591 B1**
(45) Date de publication et mention de la délivrance du brevet: **16.05.2018**
(21) Numéro de dépôt: 15719499.4
(22) Date de dépôt: 25.03.2015
(51) Int. Cl.: E04F 13/08, F16B 37/08, F16B 5/02

(54) **ÉLÉMENT DE MAINTIEN CONSTITUÉ D'UNE MOLETTE ET D'UNE TIGE AVEC RÉGLAGE DE LA LONGUEUR DE LA TIGE DÉPASSANT DE LA MOLETTE**
HALTEELEMENT AUS EINEM EINSTELLKNOPF UND EINER STANGE MIT EINSTELLUNG DER LÄNGE DER STANGE ÜBER DEN EINSTELLKNOPF HINAUS
HOLDING ELEMENT MADE UP OF AN ADJUSTING KNOB AND A ROD WITH ADJUSTMENT OF THE LENGTH OF THE ROD PROJECTING BEYOND THE ADJUSTING KNOB

(30) Priorité: 26.03.2014 FR 1400751
(43) Date de publication de la demande: 08.02.2017
(73) Titulaire: Azerad, Thierry, 75016 Paris (FR)
(72) Inventeur: Azerad, Thierry, 75016 Paris (FR)
(74) Mandataire: Cabinet Plasseraud
(86) Numéro de dépôt international: PCT/FR2015/000066
(87) Numéro de publication internationale: WO 2015/144998

(56) Documents cités:
- FR-A1- 2 826 390
- FR-A1- 2 930 006

## Description

La présente invention concerne un élément de maintien constitué d'une molette recevant de manière amovible une tige avec possibilité de réglage fin de la longueur de la tige dépassant de la molette, cette longueur étant dite de travail et correspondant à l'épaisseur d'un élément de construction à maintenir en étant enserré par l'élément.

Une application particulièrement intéressante de cet élément de maintien selon la présente invention se trouve dans le domaine du bâtiment et plus précisément pour la fabrication et la commercialisation de produits destinés au second oeuvre, majoritairement des structures de support et de maintien pour la pose d'un élément de construction du type plaque de plâtre ou isolant comme de la laine de verre, l'élément de maintien enserrant l'épaisseur de l'élément de construction et servant d'appui à cet élément contre les structures de support, par exemple des ossatures métalliques.

Par exemple sans que cela soit limitatif, un tel élément de maintien associé à une tige ou un clou peut servir au maintien d'une couche d'isolant disposée sur un support ou entre deux supports, avantageusement un profilé ou deux profilés espacés de la longueur de la tige dépassant de la molette.

Il existe soit des clous qui en fait sont des tiges métalliques filetées soit des clous avec denture mais sans filet. Il existe aussi une forme de réalisation avec filets portés par un tube, ce qui rend délicat l'opération de montage de l'isolant. De tels clous ou tubes ne permettent pas d'atteindre le niveau de précision requis pour le maintien de l'élément de construction. En effet, pour des raisons d'économie, la longueur du clou doit facilement s'adapter à l'épaisseur de l'élément de construction maintenu tout en garantissant un maintien de l'élément de construction qu'il enserre.

Le document FR-A-2 930 006, illustrant l'état de la technique le plus proche, décrit un élément de maintien comprenant une tige dont une portion de la longueur dite longueur de travail correspond à l'épaisseur d'un élément de construction à maintenir par ledit élément. Une bride triangulaire peut se positionner par rotation pour différentes largeurs d'ossature et la tige est sécable à une longueur désirée.

Le document FR-A-2 826 390 décrit un dispositif de fixation pour la liaison entre des profilés comprenant des premier et second organes de fixation liés à un profilé respectif, le premier présentant une tige et le second pouvant se fixer en une position réglable le long de la tige en comprenant deux mâchoires serrant la tige actionnables par un bras de manoeuvre.

Dans ces deux documents, le maintien de la longueur de travail de la tige n'est pas garantie molette décrite n'est pas une pièce en elle-même car il n'est pas prévu de moyen de blocage de la bride triangulaire ou du second organe dans sa position de travail qui soit efficace en toutes circonstances. En effet dans ce dernier document, c'est le second organe qui forme les mâchoires d'où un possible déplacement du second organe lors de leur fermeture.

Le problème à la base de la présente invention est de concevoir un élément de maintien comportant une tige présentant une possibilité de réglage, simple, rapide et précis de la longueur de travail de la tige afin que cet élément soit adaptable à de multiples utilisations requérant une longueur spécifique de travail de la tige, ce réglage devant être facile de mise en oeuvre tout en garantissant le maintien de la longueur de travail de la tige en utilisation.

A cet effet, on prévoit selon l'invention un élément de maintien selon la revendication 1 comprenant une tige dont une portion de la longueur dite longueur de travail correspond à l'épaisseur d'un élément de construction à maintenir par ledit élément, caractérisé en ce que la tige présente un filetage, l'élément de maintien comprenant une molette de forme sensiblement circulaire et recevant dans un évidement médian la tige de manière amovible, la molette étant munie de moyens de solidarisation avec la tige comprenant des moyens de vissage coopérant avec le filetage de la tige pour le réglage de la longueur de travail de la tige par vissage ou dévissage de la molette autour de la tige, les moyens de solidarisation comportant deux plaques de solidarisation logées dans la molette de l'élément de maintien et s'étendant en direction opposée l'une de l'autre selon un axe de déplacement suivant un diamètre de la molette, chaque plaque étant mobile entre, d'une part, une première position dans laquelle sa portion d'extrémité intérieure se trouve sur le passage de l'évidement et son extrémité extérieure fait saillie latéralement de la molette, cette première position étant prise quand aucune action par un poseur n'est effectuée sur son extrémité extérieure et, d'autre part, une seconde position dans laquelle sa portion d'extrémité intérieure libère le passage de l'évidement quand une action est exercée sur son extrémité extérieure par un poseur.

L'effet technique est d'utiliser une molette pour effectuer un réglage précis de la longueur de travail de la tige. Les moyens de solidarisation effectuent une mise en prise rapide de la tige sur la molette. La désolidarisation de la tige avec la molette ne demande pas une intervention complexe du poseur de l'élément et le réglage de la longueur de travail de la tige est rapide et très précis, ce réglage étant fait par rotation de la molette, ce qui est une opération facilement contrôlable par le poseur, de manière intuitive.

De manière facultative, l'invention comprend en outre au moins l'une quelconque des caractéristiques suivantes :
- Un grand avantage de la présente invention réside dans un effort aisé d'application sur l'extrémité extérieure des plaques de solidarisation, avantageusement sous la forme d'un bouton, effort qui est suivi automatiquement d'une mise en prise efficace des moyens de vissage des plaques sur le filetage de la tige une fois cet effort relâché.
- l'extrémité extérieure de chaque plaque de solidarisation comporte un bouton actionnable par le poseur pour mettre la plaque dans sa seconde position.
- chaque plaque de solidarisation est rappelée dans la première position par un moyen de rappel en position.
- le moyen de rappel en position d'une plaque est porté par l'autre plaque et inversement, ce moyen de rappel étant sous la forme d'une lame de rappel.
- la portion d'extrémité intérieure porte les moyens de vissage, ces moyens de vissage coopérant avec le filetage de la portion en regard de la tige introduite dans l'évidement de la molette.
- les portions d'extrémité intérieure des plaques de solidarisation présentent des cavités portant les moyens de vissage sur leur paroi interne et entourant au moins partiellement la portion de la tige en regard logée dans l'évidement.
- les moyens de vissage sont sous la forme de crabots superposés dont les dimensions et l'espacement correspondent aux dimensions du pas du filetage de la tige.
- les crabots s'étendent sous la forme d'arcs de cercles superposés en étant décalés par rapport à l'axe de déplacement des plaques de solidarisation.
- le milieu de l'arc de cercle associé à chaque crabot est décalé de 45° par rapport à l'axe de déplacement des plaques de solidarisation.
- l'extrémité de la tige la plus éloignée de la molette comprend des moyens de clippage avec une première structure de support.
- les moyens de clippage sont formés d'une entretoise pénétrant dans la première structure de support, l'entretoise comprenant une rainure recevant une portion de la première structure de support par clippage.
- la molette comprend un corps logeant les moyens de solidarisation de la tige avec la molette, le corps étant coiffé d'un chapeau sur sa face opposée à la portion de la longueur de la tige dite longueur de travail, un espacement étant prévu entre le corps et le chapeau, ledit espacement servant au clippage avec une seconde structure de support.

Dans le cadre de l'invention, on prévoit un procédé de montage amovible d'une tige munie d'un filetage dans une molette et de réglage de la molette par rapport à la tige pour l'obtention d'une longueur de travail souhaitée de la tige dans un tel élément de maintien, le procédé comprenant les étapes suivantes :
- action d'un poseur exercée sur l'extrémité extérieure des plaques de solidarisation pour rendre inopérants les moyens de solidarisation de la tige avec la molette,
- introduction d'une portion de la tige dans la molette,
- cessation de l'action du poseur rendant opérantes les plaques de solidarisation en tant que moyens de solidarisation de la tige avec la molette, les moyens de vissage des moyens de solidarisation coopérant avec le filetage de la tige pour le réglage de la longueur de travail de la tige,
- rotation de la molette jusqu'à obtenir la longueur de travail souhaitée de la tige.

La présente invention concerne enfin un élément de construction intercalé entre des première et seconde structures de support, caractérisé en ce qu'il est maintenu entre les structures de support par au moins un tel élément de maintien.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective de dessus d'une forme de réalisation de l'élément de maintien selon la présente invention constitué d'une molette et d'une tige, la tige étant montée dans la molette,
- la figure 2 est une représentation schématique d'une vue en perspective de dessous de l'élément de maintien selon la présente invention constitué d'une molette et d'une tige, la tige étant montée dans la molette,
- la figure 3 est une représentation schématique d'une vue en perspective de côté d'une autre forme de réalisation de l'élément de maintien selon la présente invention constitué d'une molette et d'une tige, la tige étant montée dans la molette,
- la figure 4 est une représentation schématique d'une vue en perspective de dessus des plaques de solidarisation logées dans un élément de maintien selon la présente invention, ces plaques de solidarisation étant logées dans la molette de l'élément de maintien.

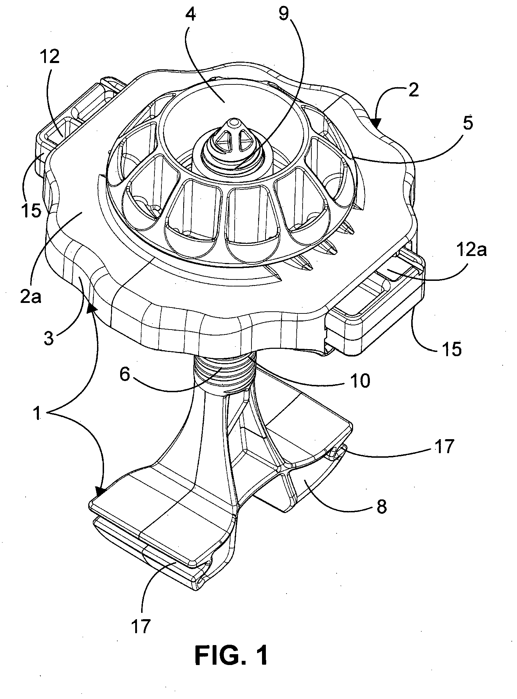

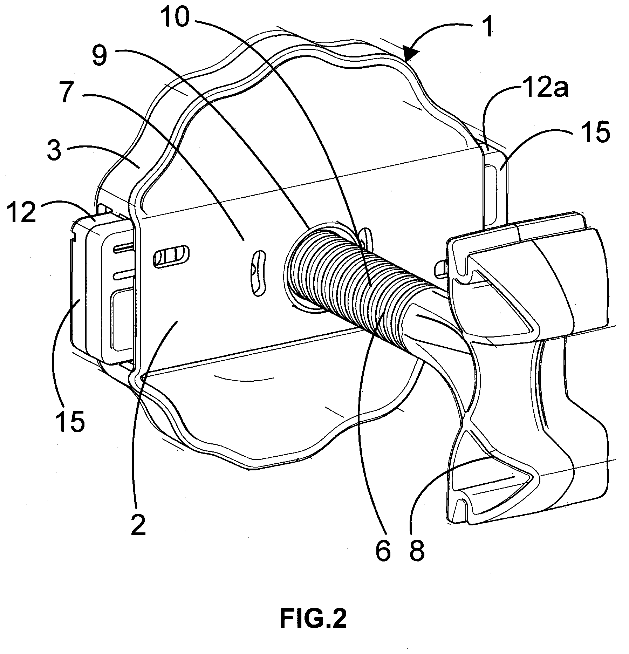

En se référant aux figures 1 à 4, il est montré une forme de réalisation de l'élément de maintien 1 destiné à s'adapter à l'épaisseur d'un élément de construction à maintenir qu'il enserre au moins partiellement et à assurer le positionnement de cet élément de construction sur au moins une structure de support, l'élément de construction et la structure de support étant non montrés aux figures.

L'élément de maintien 1 selon la présente invention comporte une molette 2 qui présente une forme extérieure avec une tranche 3, cette forme extérieure pouvant être ronde ou à facettes. L'élément de maintien 1 selon la présente invention comporte aussi une tige 6 présentant un filetage 10.

La molette présente un corps 2a et la face supérieure du corps 2a de la molette 2, c'est-à-dire la face qui est opposée à celle par laquelle va dépasser la plus grande partie de la tige 6 destinée à être associée à la molette 2, porte un chapeau 4. Le chapeau 4 coiffe cette face supérieure en formant la partie extérieure de la molette 2, c'est-à-dire la partie qui n'est pas en vis-à-vis de l'élément de construction à enserrer par l'élément de maintien 1. Un espacement 5 peut subsister entre le corps 2a de la molette 2 et le chapeau 4.

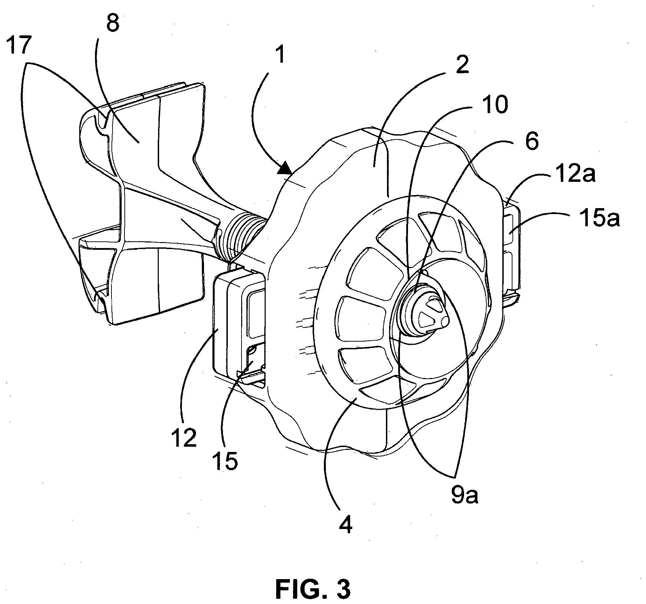

En position montée de l'élément de liaison 1, la molette 2 reçoit la tige 6 par un évidement 9 médian qui la traverse. L'évidement 9 peut être prolongé par des gouttières 9a entourant la tige 6 et en prise avec le filetage 10 de la tige 6, ces gouttière s'étendant dans la hauteur du chapeau 4 qui a été illustré sans son contour supérieur à la figure 3 afin de mieux voir son intérieur.

La longueur de la tige 6 qui dépasse de la face inférieure de la molette 2, dite longueur de travail, doit être réglable afin d'être adaptée à l'élément de construction qui est enserré au moins partiellement par l'élément de maintien 1.

C'est la rotation de la molette 2 par rapport à la tige 6 qui fait varier la longueur de travail de la tige 6 et assure l'adaptation de cette longueur de travail à l'épaisseur de l'élément de construction à maintenir. Pour ce faire, la tige 6 présente un filetage 10 et la molette 2 comprend des moyens de vissage 11 coopérant avec les pas du filetage 10 de la portion en regard de la tige 6 quand une portion de celle-ci est logée dans l'évidement 9 de la molette 2. Avantageusement, le filetage 10 de la tige 6 est externe. Les moyens de vissage 11 présents dans la molette 2 seront ultérieurement décrits.

Sur la face inférieure de la molette 2, c'est-à-dire la face qui est tournée vers la partie de la tige 6 destinée à s'étendre le long de l'épaisseur d'un élément de construction à maintenir et dite longueur de travail, se trouve une pièce de renforcement 7 qui garantit la résistance de la molette 2 et la protection des moyens de solidarisation.

La pièce de renforcement 7 peut présenter une partie principale s'étendant diamétralement par rapport à la molette 2 avantageusement d'un bord de tranche de la molette 2 au bord de tranche diamétralement opposé.

Comme précédemment mentionné, une telle molette 2 est destinée à être associée avec une tige 6 la traversant au moins partiellement. La molette 2 reçoit une portion de la tige 6 en son intérieur de manière amovible. L'évidement 9 médian de la molette 2 la traverse de sa face supérieure à sa face inférieure, cette dernière étant avantageusement destinée à l'introduction de la tige 6. Il est possible qu'une portion d'extrémité de la tige 6 ressorte de la face supérieure de la molette 2 portant le chapeau 4. Cette portion d'extrémité ou portion d'extrémité libre de la tige 6 ne porte avantageusement aucun élément et peut être sous forme d'une pointe, cette pointe pouvant dépasser du chapeau 4 de la molette 2.

L'autre extrémité de la tige 6 ou extrémité de tête de tige peut présenter une forme de blocage 8 permettant son accrochage à une première structure de support quelconque, avantageusement une ossature fréquemment sous forme d'un rail mais ceci n'est pas limitatif. La longueur de travail de la tige 6 est définie entre la portion d'extrémité de tête de la tige 6 après la forme de blocage 8 et la molette 2.

Avantageusement, la tige 6 est en plastique, préférentiellement en polypropylène chargé de 30% fibre de verre. Cette tige 6 présente un filetage 10 s'étendant sur la majeure partie de sa longueur. Il a été choisi le plastique comme composant de la tige 6 de préférence à un métal qui est conducteur, afin que l'élément de maintien 1 fasse aussi avantageusement office de rupteur de pont thermique.

L'évidement 9 médian de la molette 2 peut n'entourer qu'à distance la portion de la tige 6 logée à l'intérieur de la molette 2, les moyens de vissage 11 faisant partie de moyens de solidarisation amovible de la tige 6 étant en appui contre les pas du filetage externe de la tige 6. Les moyens de vissage 11 présentent des dimensions et des espacements correspondant aux dimensions du pas du filetage 10 de la tige 6.

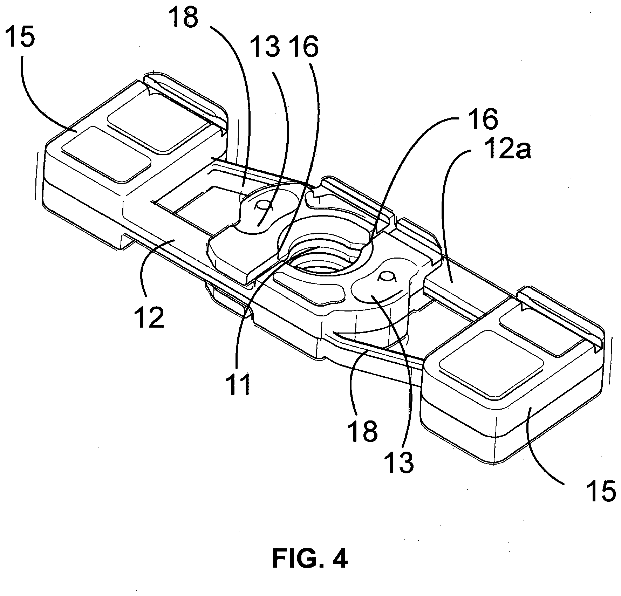

Ainsi, en se référant à toutes les figures et plus particulièrement à la figure 4, des moyens de solidarisation 12, 12a amovible de la tige 6 par rapport à la molette 2 sont prévus dans la molette 2. Ces moyens de solidarisation 12, 12a peuvent être en majeure partie contenus entièrement dans la molette 2. Ces moyens de solidarisation amovible 12, 12a effectuent une action de mise en prise de la tige 6 avec la molette 2 sans toutefois gêner la rotation de la molette 2 par rapport à la tige 6 pour le réglage de la longueur de travail de la tige 6. La molette 2 peut ainsi se visser ou se dévisser sur la tige 6 vers l'extrémité de tête de tige en diminuant ou en augmentant la longueur de travail de la tige 6.

Ces moyens de solidarisation 12, 12a comprennent des moyens de vissage 11 coopérant avec le filetage 10 de la tige 6 pour le réglage de la longueur de travail de la tige 6 par vissage ou de dévissage de la molette 2 autour de la tige 6.

Les moyens de solidarisation amovible logés dans la molette 2 comportent deux plaques 12, 12a de solidarisation s'étendant en sens contraire selon un diamètre de la molette 2, donc disposées symétriquement radialement par rapport à la molette 2.

Les portions d'extrémité intérieure 13 des plaques 12, 12a, donc situées le plus à l'intérieur de la molette 2 tandis que les portions d'extrémité extérieure sont celles situées le plus à l'extérieur de la molette 2, sont avantageusement emboîtées au moins partiellement l'une dans l'autre. Ainsi, la portion d'extrémité intérieure 13 d'une plaque 12 ou 12a peut être plus proche de l'extrémité extérieure de l'autre plaque 12a ou 12 que la propre portion d'extrémité intérieure 13 de l'autre plaque 12a ou 12.

Ceci peut se faire par une configuration spécifique des portions d'extrémité intérieure 13 permettant un tel emboîtement, les plaques 12, 12a étant dans un même plan radial de la molette 2 ou dans des plans radiaux superposés. Le terme emboîtement est à prendre dans son sens large et un tel emboîtement ne signifie pas qu'il existe forcément un contact entre les portions d'extrémité intérieure 13 des deux plaques 12, 12a mais seulement qu'une portion d'extrémité intérieure 13 d'une plaque 12 ou 12a est plus proche de l'extrémité extérieure de l'autre plaque 12a ou 12 que sa propre portion d'extrémité intérieure et inversement.

Des crans, dont un seul est référencé par face, peuvent être prévus sur au moins une face des portions d'extrémité intérieure 13 des plaques 12, 12a de solidarisation. Ces crans, quand positionnés sur les faces en vis-à-vis des portions d'extrémité intérieure 13, permettent un guidage en position des plaques 12, 12a l'une par rapport à l'autre tout en autorisant un déplacement axial des plaques 12, 12a par rapport à la molette 2. Des crans peuvent aussi être prévus sur les faces opposées l'une à l'autre de chaque plaque 12, 12a, ces crans coopérant avec des formes logées à l'intérieur de la molette 2 pour un guidage des plaques 12, 12a dans le corps 2a de la molette 2.

Dans une autre forme de réalisation, les portions d'extrémité intérieure 13 des plaques 12, 12a peuvent être superposées l'une à l'autre, l'une des portions 13 reposant sur l'autre. Des crans peuvent être prévus sur chacune des faces des portions en vis-à-vis, de sorte qu'il puisse exister une force de frottement entre les deux plaques 12, 12a permettant de les maintenir l'une par rapport à l'autre sans toutefois empêcher un glissement radial des plaques 12, 12a l'une par rapport à l'autre.

Chaque plaque 12, 12a présente une extrémité extérieure destinée à faire saillie du bord de la tranche 3 de la molette 2 au moins dans la position de solidarisation de la tige 6 par rapport à la molette 2. La portion d'extrémité intérieure 13 de chaque plaque 12, 12a peut se situer à proximité de l'aplomb de l'évidement 9 de la molette 2 quand aucune tige 3 n'est logée dans l'évidement 9 médian de la molette 2.

L'extrémité extérieure de chaque plaque 12, 12a de solidarisation peut porter un bouton 15 destiné à être appuyé par le poseur préalablement à la solidarisation de la tige 6 sur la molette 2. Les boutons 15 des plaques 12, 12a de solidarisation peuvent être identiques en étant montés tête bêche dans la molette 2.

La portion d'extrémité intérieure 13 de chaque plaque 12, 12a peut comprendre une cavité 16 interne la traversant dans son épaisseur. Cette cavité 16 interne est traversée par une portion de la tige 6 lors de l'introduction de la tige 6 dans la molette 2. Les cavités 16 internes de chaque plaque 12, 12a présentent des parois de forme complémentaire pour entourer partiellement à distance la tige 6 quand celle-ci est enfoncée dans l'évidement médian 9 de la molette 2. Avantageusement, la cavité 16 interne de chaque plaque 12, 12a se trouve de l'autre côté de la tige 6 que celui sur lequel se trouve l'extrémité extérieure et le bouton 15 de la même plaque 12, 12a, la cavité 16 de chaque plaque 12, 12a étant en vis-à-vis de la cavité 16 de l'autre plaque 12a ou 12.

Chaque plaque 12, 12a est mobile entre, d'une part, une première position dans laquelle sa portion d'extrémité intérieure 13 se trouve sur le passage de l'évidement 9 et son extrémité extérieure fait saillie latéralement de la molette 2, cette première position étant prise quand aucune action par un poseur n'est effectuée sur son extrémité extérieure et, d'autre part, une seconde position dans laquelle sa portion d'extrémité intérieure 13 libère le passage de l'évidement 9 quand une action est exercée sur son extrémité extérieure par le poseur.

Quand aucune force n'est exercée par un poseur sur chaque bouton 15 et qu'aucune tige 6 n'est enfoncée dans l'évidement 9 médian de la molette 2, les parois des deux cavités 16 disposées respectivement sur une portion d'extrémité intérieure 13 d'une plaque 12, 12a de solidarisation se trouvent sur le passage pour la tige 6 dans l'évidement 9 de la molette 2. Cette position correspond à la première position.

Quand une force de pression est exercée par le poseur sur les deux boutons 15, les portions d'extrémité intérieure 13 des plaques 12, 12a de solidarisation sont poussées en direction inverse en éloignement du bord de tranche 3 recevant leur bouton 15 associé : le passage pour la tige 6 dans l'évidement 9 est alors libéré et la tige 6 peut être introduite dans l'évidement 9 de la molette 2. Cette position est la seconde position.

Quand la force de pression du poseur est relâchée, les portions d'extrémité intérieure 13 des plaques 12, 12a de solidarisation retournent dans leur position de blocage du passage de l'évidement 9 de la molette 2. Les parois de chaque cavité 16 des portions d'extrémité intérieure 13 des plaques 12, 12a de solidarisation sont alors mises en appui contre la tige 6 en effectuant par de la même leur action de solidarisation de la tige 6.

Pour effectuer une meilleure solidarisation de la tige 6 avec la molette 2, les parois des cavités 16 peuvent être munies des moyens de vissage 11, précédemment mentionnés. Ces moyens de vissage 11 coopèrent avec le filetage 10 de la portion en regard de la tige 6 introduite dans l'évidement 9 de la molette 2, cela pour effectuer le réglage de la longueur de travail de la tige 6.

Dans une forme de réalisation, ces moyens de vissage peuvent être avantageusement sous la forme de crabots 11 pénétrant dans le filetage 10 de la portion de la tige 6 en vis-à-vis. Ces crabots 11 sont superposés et leurs dimensions et leur espacement correspondent aux dimensions du pas du filetage 10 de la tige 6.

Ainsi, les crabots 11 peuvent exercer une action de blocage ou de verrouillage sur la tige 6 lorsqu'ils sont sollicités sous l'effort de traction ou de compression de la tige 6 tout en permettant la rotation de la molette 2 par rapport à la tige 6 lors du réglage de la longueur de travail de la tige 6, les crabots 11 pouvant se déplacer dans le filetage 10 de la tige 6.

Pour chaque plaque 12, 12a de solidarisation, les crabots 11 s'étendent avantageusement selon un arc de cercle dans la cavité 16 associée. Il peut y avoir plusieurs crabots 11 superposés les uns aux autres. Avantageusement, les crabots 11 ne sont pas directement centrés sur l'axe de manoeuvre des boutons 15 des plaques 12, 12a de solidarisation mais préférentiellement disposés décalés par rapport à cet axe radial.

Par exemple, le milieu de l'arc de cercle formé par un crabot 11 peut être positionné en formant un angle de 45° par rapport à l'axe de manoeuvre des plaques 12, 12a de solidarisation qui passe par la partie médiane des deux boutons 15 des plaques 12, 12a. Comme précédemment mentionné, quand les plaques 12, 12a de solidarisation présentent des crans sur au moins une de leurs faces, de tel crans peuvent éviter le recul intempestif des crabots 11 hors du contact de la tige 6 lors d'un effort exercé sur la tige 6.

Avantageusement, chaque plaque 12, 12a de solidarisation est associée avec un moyen de rappel 18 en position dans laquelle son bouton 15 fait saillie à l'extérieur du bord de la tranche 3 de la molette 2, c'est-à-dire la première position précédemment mentionnée. Cela permet un maintien automatique de la portion de la tige 6 en vis-à-vis de l'évidement 9 avec rappel automatique des portions d'extrémité intérieure 13, avantageusement par les parois internes des cavités 16, contre la tige 6.

Le moyen de rappel 18 en position peut être porté par chaque plaque 12, 12a de solidarisation. Dans une forme de réalisation non limitative, c'est la seconde plaque 12, 12a qui porte un moyen de rappel 18 en position agissant sur la première plaque 12, 12a et inversement. Ainsi, il y a un effet conjoint et interactif des deux plaques 12, 12a de solidarisation pour ramener l'autre plaque 12, 12a associée dans la position pour que son bouton 15 fasse saillie du bord de la tranche 3 de la molette 2.

Dans cette forme de réalisation, le moyen de rappel en position peut être sous la forme d'une lame élastique 18 portée par la partie médiane d'une plaque 12, 12a se trouvant à proximité de la portion d'extrémité intérieure 13 de l'autre plaque 12a, 12 et effectuant son action de rappel sur la face la plus interne de cette portion d'extrémité intérieure 13 de l'autre plaque 12, 12a et inversement.

D'autres formes de réalisation sont aussi possibles, chaque plaque 12, 12a pouvant aussi porter un propre moyen de rappel 18 en position et donc effectuer individuellement son rappel en position. Le choix des matériaux pour les moyens de rappel 18 contribue aussi beaucoup aux résultats. Il est ainsi préféré d'utiliser un matériau plastique avec de fortes propriétés élastiques et de mémoire importantes, notamment pour les moyens de rappel 18.

Conformément à l'invention, il est ainsi aisé au poseur de régler la longueur de travail de la tige 6 dépassant de la molette 2 par rotation de la molette de l'élément de maintien 1. La rotation de la molette 2 permet de réduire ou d'augmenter la longueur de travail de la tige 6 dépassant de la molette 2 du fait de la coopération du filetage 10 présent sur la tige 6 par rapport aux moyens de vissage, avantageusement des crabots 11, que présentent les moyens de solidarisation 12, 12a. Ceci présente le grand avantage de régler de manière simple la longueur de travail de la tige 6 dépassant de la molette 2 et donc de l'adapter à l'épaisseur de l'élément de construction à maintenir.

Ainsi, la présente invention concerne un procédé de montage amovible d'une tige 6 munie d'un filetage 10 dans une molette 2 et de réglage de la molette 2 par rapport à la tige 6 pour l'obtention d'une longueur de travail souhaitée de la tige 6 dans un élément de maintien 1 comme précédemment décrit.

Le procédé comprend l'étape d'action d'un poseur pour rendre inopérants les moyens de solidarisation 12, 12a de la tige 6 avec la molette 2 suivie de l'introduction d'une portion de la tige 6 dans la molette 2. Ensuite, il est procédé à la cessation de l'action du poseur, ce qui rend à nouveau opérants les moyens de solidarisation 12, 12a de la tige 6 avec la molette 2. Les moyens de vissage 11 des moyens de solidarisation 12, 12a coopèrent alors avec le filetage 10 de la tige 6 pour le réglage de la longueur de travail de la tige 6. Le poseur effectue alors simplement la rotation de la molette 2 jusqu'à obtenir la longueur de travail souhaitée de la tige 6.

De manière préférentielle, la molette 2 et l'extrémité de la tige 6 la plus éloignée de la molette 2 peuvent porter respectivement des moyens de solidarisation 17, 5 avec une structure de support respective de l'élément de construction à maintenir.

Ces structures de support peuvent, par exemple, être sous la forme respective d'une ossature, fréquemment métallique, de préférence un rail aussi appelé fourrure, notamment des fourrures de type 45 et 47. Cette ossature sous forme d'un rail peut présenter une forme en U avec l'extrémité libre des branches du U recourbée à 90° vers l'intérieur du U par rapport aux branches, communément appelée retour d'aile.

Dans un tel cas, l'extrémité de la tige 6 la plus éloignée de la molette 2 peut présenter une entretoise 8 comme forme de blocage précédemment mentionnée.

L'entretoise 8 pénètre dans le rail aussi appelé fourrure et peut être munie de formes d'attache rapide, par exemple en présentant une rainure 17 recevant par clippage l'extrémité libre recourbée des branches du rail.

Pour la molette 2, celle-ci peut se clipper sur son rail associé, ce rail présentant une forme similaire au rail coopérant avec l'autre extrémité de la tige 6, en faisant pénétrer l'extrémité libre recourbée des branches du rail entre le chapeau 4 de la molette 2 et le corps 2a de la molette 2, un espacement 5 subsistant entre le chapeau 4 et le corps 2a.

Ainsi, une molette 2 conforme à la présente invention combine avantageusement deux fonctions à savoir une fonction de réglage de la longueur de travail de la tige 6 et une fonction de solidarisation à une structure de support.

La présente invention concerne donc aussi un élément de construction intercalé entre des première et seconde structures de support, cet élément étant maintenu entre les structures de support par au moins un élément de maintien tel que précédemment décrit.

L'invention n'est nullement limitée aux modes de réalisation décrits et illustrés qui n'ont été donnés qu'à titre d'exemples.

## Revendications

1. Elément de maintien (1) comprenant une tige (6) dont une portion de la longueur dite longueur de travail correspond à l'épaisseur d'un élément de construction à maintenir par ledit élément (1), la tige (6) présentant un filetage (10), l'élément de maintien (1) comprenant une molette (2) de forme sensiblement circulaire et recevant dans un évidement (9) médian la tige (6) de manière amovible, la molette (2) étant munie de moyens de solidarisation (12, 12a) avec la tige (6) comprenant des moyens de vissage (11) coopérant avec le filetage (10) de la tige (6) pour le réglage de la longueur de travail de la tige (6) par vissage ou dévissage de la molette (2) autour de la tige (6), l'élément de maintien étant **caractérisé en ce que** les moyens de solidarisation comportent deux plaques de solidarisation (12, 12a) logées dans la molette (2) de l'élément de maintien et s'étendant en direction opposée l'une de l'autre selon un axe de déplacement suivant un diamètre de la molette (2), chaque plaque (12, 12a) étant mobile entre, d'une part, une première position dans laquelle sa portion d'extrémité intérieure (13) se trouve sur le passage de l'évidement (9) et son extrémité extérieure fait saillie latéralement de la molette (2), cette première position étant prise quand aucune action par un poseur n'est effectuée sur son extrémité extérieure et, d'autre part, une seconde position dans laquelle sa portion d'extrémité intérieure (13) libère le passage de l'évidement (9) quand une action est exercée sur son extrémité extérieure par le poseur.

2. Elément de maintien (1) selon la revendication précédente, dans lequel l'extrémité extérieure de chaque plaque (12, 12a) de solidarisation comporte un bouton (15) actionnable par le poseur pour mettre la plaque (12, 12a) dans sa seconde position.

3. Elément de maintien (1) selon l'une quelconque des deux revendications précédentes, dans lequel chaque plaque (12, 12a) de solidarisation est rappelée dans la première position par un moyen de rappel (18) en position.

4. Elément de maintien (1) selon la revendication précédente, dans lequel le moyen de rappel (18) en position d'une plaque (12, 12a) est porté par l'autre plaque (12, 12a) et inversement, ce moyen de rappel étant sous la forme d'une lame de rappel (18).

5. Elément de maintien (1) selon l'une quelconque des quatre revendications précédentes, dans lequel la portion d'extrémité intérieure (13) de chaque plaque (12, 12a) porte les moyens de vissage (11), ces moyens de vissage (11) coopérant avec le filetage (10) de la portion en regard de la tige (6) introduite dans l'évidement (9) de la molette (2).

6. Elément de maintien (1) selon la revendication précédente, dans lequel les portions d'extrémité intérieure (13) des plaques de solidarisation (12, 12a) présentent des cavités (16) portant les moyens de vissage (11) sur leur paroi interne et entourant au moins partiellement la portion de la tige (6) en regard logée dans l'évidement (9).

7. Elément de maintien (1) selon l'une quelconque des revendications 1 à 6, dans lequel les moyens de vissage sont sous la forme de crabots (11) superposés dont les dimensions et l'espacement correspondent aux dimensions du pas du filetage (10) de la tige (6).

8. Elément de maintien (1) selon la revendication précédente, dans lequel les crabots (11) s'étendent sous la forme d'arcs de cercles superposés en étant décalés par rapport à l'axe de déplacement des plaques de solidarisation (12, 12a).

9. Elément de maintien (1) selon la revendication précédente, dans lequel le milieu de l'arc de cercle associé à chaque crabot est décalé de 45° par rapport à l'axe de déplacement des plaques de solidarisation (12, 12a).

10. Elément de maintien (1) selon l'une quelconque des revendications précédentes, dans lequel l'extrémité de la tige (6) la plus éloignée de la molette (2) comprend des moyens de clippage (8, 17) avec une première structure de support.

11. Elément de maintien (1) selon la revendication précédente, dans lequel les moyens de clippage (8, 17) sont formés d'une entretoise (8) pénétrant dans la première structure de support, l'entretoise (8) comprenant une rainure (17) recevant une portion de la première structure de support par clippage.

12. Elément de maintien (1) selon l'une quelconque des revendications précédentes, dans lequel la molette (2) comprend un corps (2a) logeant les plaques de solidarisation (12, 12a) de la tige (6) avec la molette (2), le corps (2a) étant coiffé d'un chapeau (4) sur sa face opposée à la portion de la longueur de la tige (6) dite longueur de travail, un espacement (5) étant prévu entre le corps (2a) et le chapeau (4), ledit espacement (5) servant au clippage avec une seconde structure de support.

13. Procédé de montage amovible d'une tige (6) munie d'un filetage (10) dans une molette (2) et de réglage de la molette (2) par rapport à la tige (6) pour l'obtention d'une longueur de travail souhaitée de la tige (6) dans un élément de maintien (1) selon l'une quelconque des revendications précédentes, le procédé comprenant les étapes suivantes :
- action d'un poseur exercée sur l'extrémité extérieure des plaques de solidarisation (12, 12a) pour les rendre inopérantes en tant que moyens de solidarisation de la tige (6) avec la molette (2),
- introduction d'une portion de la tige (6) dans la molette (2),
- cessation de l'action du poseur rendant opérantes les plaques de solidarisation (12, 12a) en tant que moyens de solidarisation de la tige (6) avec la molette (2), les moyens de vissage (11) des plaques de solidarisation (12, 12a) coopérant avec le filetage (10) de la tige (6) pour le réglage de la longueur de travail de la tige (6),
- rotation de la molette (2) jusqu'à obtenir la longueur de travail souhaitée de la tige (6).

14. Elément de construction intercalé entre des première et seconde structures de support, **caractérisé en ce qu'**il est maintenu entre les structures de support par au moins un élément de maintien (1) selon l'une quelconque des revendications 1 à 12.

## Patentansprüche

1. Halteelement (1) aufweisend eine Stange (6), ein Abschnitt deren Länge, Arbeitslänge genannt, der Dicke eines von dem Element (1) zu haltenden Konstruktionselements entspricht, wobei:
die Stange (6) ein Gewinde (10) aufweist,
das Halteelement (1) einen im Wesentlichen kreisförmigen Einstellknopf (2) aufweist,
der die Stange (6) auf lösbare Weise in einer zentralen Aussparung (9) aufnimmt,
der Einstellknopf (2) mit Verbindungseinrichtungen (12, 12a) zum Verbinden mit der Stange (6) versehen ist, die Schraubeinrichtungen (11) aufweisen, die mit dem Gewinde (10) der Stange (6) zusammenwirken, um durch Drehen des Einstellknopfs (2) um die Stange (6) in Einschraubrichtung oder Ausschraubrichtung die Arbeitslänge der Stange (6) anzupassen,
wobei das Halteelement **dadurch gekennzeichnet ist, dass**
die Verbindungseinrichtungen zwei Verbindungsplatten (12, 12a) aufweisen, die in dem Einstellknopf (2) des Halteelements untergebracht sind und sich in zueinander entgegengesetzter Richtung gemäß einer Verschiebungsachse, die einem Durchmesser des Einstellknopfs (2) folgt, erstrecken, wobei jede Platte (12, 12a) bewegbar ist zwischen einerseits einer ersten Position, in welcher ihr innerer Endabschnitt (13) sich über dem Durchlass der Aussparung (9) befindet und ihr äußeres Ende seitlich des Einstellknopfs (2) vorragt, wobei diese erste Position eingenommen ist, wenn von einem Benutzer keine Aktion auf ihr äußeres Ende ausgeübt wird, und andererseits einer zweiten Position, in welcher ihr innerer Endabschnitt (13) den Durchlass der Aussparung (9) freigibt, wenn von dem Benutzer eine Aktion auf ihr äußeres Ende ausgeübt wird.

2. Halteelement (1) nach dem vorstehenden Anspruch, wobei das äußere Ende jeder Verbindungsplatte (12, 12a) einen Knopf (15) aufweist, der von dem Benutzer betätigbar ist, um die Platte (12, 12a) in ihre zweite Position zu stellen.

3. Halteelement (1) nach einem der zwei vorstehenden Ansprüche, wobei jede Verbindungsplatte (12, 12a) von einer Positionsrückstelleinrichtung (18) in die erste Position zurückgestellt wird.

4. Halteelement (1) nach dem vorstehenden Anspruch, wobei die Positionsrückstelleinrichtung (18) der einen Platte (12, 12a) von der anderen Platte (12, 12a) und umgekehrt getragen wird, wobei diese Rückstelleinrichtung in Form eines Rückstellblättchens (18) ist.

5. Halteelement (1) nach einem der vier vorstehenden Ansprüche, wobei der innere Endabschnitt (13) jeder Platte (12, 12a) die Schraubeinrichtungen (11) trägt, die mit dem Gewinde (10) des gegenüberliegenden Abschnitts der in die Aussparung (9) des Einstellknopfs (2) eingeführten Stange (6) zusammenwirken.

6. Halteelement (1) nach dem vorstehenden Anspruch, wobei die inneren Endabschnitte (13) der Verbindungsplatten (12, 12a) Hohlräume (16) aufweisen, die die Schraubeinrichtungen (11) an ihrer Innenwand tragen und den in der Aussparung (9) gegenüber angeordneten Abschnitt der Stange (6) mindestens teilweise umgeben.

7. Halteelement (1) nach einem der Ansprüche 1 bis 6, wobei die Schraubeinrichtungen in Form von übereinander liegenden Klauen (11) sind, deren Abmessungen und Abstände den Abmessungen der Steigung des Gewindes (10) der Stange (6) entsprechen.

8. Halteelement (1) nach dem vorstehenden Anspruch, wobei die Klauen (11) sich in Form von Kreisbögen erstrecken, die übereinander angeordnet sind und bezüglich der Verschiebungsachse der Verbindungsplatten (12, 12a) versetzt angeordnet sind.

9. Halteelement (1) nach dem vorstehenden Anspruch, wobei die Mitte des Kreisbogens, der einer jeweiligen Klaue zugeordnet ist, um 45° bezüglich der Verschiebungsachse der Verbindungsplatten (12, 12a) versetzt angeordnet ist.

10. Halteelement (1) nach einem der vorstehenden Ansprüche, wobei das von dem Einstellknopf (2) entfernt gelegene Ende der Stange (6) Klemmeinrichtungen (8, 17) zum Klemmeingriff mit einer ersten Trägerstruktur aufweist.

11. Halteelement (1) nach dem vorstehenden Anspruch, wobei die Klemmeinrichtungen (8, 17) aus einer Querstrebe (8) gebildet sind, die in die erste Trägerstruktur eindringt, wobei die Querstrebe (8) eine Rille (17) aufweist, die einen Abschnitt der ersten Trägerstruktur durch Klemmeingriff aufnimmt.

12. Halteelement (1) nach einem der vorstehenden Ansprüche, wobei der Einstellknopf (2) einen Körper (2a) aufweist, in welchem die die Stange (6) mit dem Einstellknopf (2) verbindenden Verbindungsplatten (12, 12a) untergebracht sind, wobei der Körper (2a) an seiner bezüglich dem Abschnitt der Länge der Stange (6), der sogenannten Arbeitslänge, entgegengesetzten Fläche mit einer Kappe (4) bedeckt ist, wobei zwischen dem Körper (2a) und der Kappe (4) ein Freiraum (5) vorgesehen ist und der Freiraum (5) zum Klemmeingriff mit einer zweiten Trägerstruktur dient.

13. Verfahren zum lösbaren Anbringen einer mit einem Gewinde (10) versehenen Stange (6) in einem Einstellknopf (2) und zum Anpassen des Einstellknopfs (2) bezüglich der Stange (6) zur Bereitstellung einer gewünschten Arbeitslänge der Stange (6) in einem Halteelement (1) nach einem der vorstehenden Ansprüche, wobei das Verfahren die folgenden Schritte aufweist:
- von einem Benutzer ausgeübte Aktion auf das äußere Ende der Verbindungsplatten (12, 12a), um sie als Einrichtungen zum Verbinden der Stange (6) mit dem Einstellknopf (2) unwirksam zu machen,
- Einführen eines Abschnitts der Stange (6) in den Einstellknopf (2),
- Beenden der Aktion des Benutzers, die die Verbindungsplatten (12, 12a) als Einrichtungen zum Verbinden der Stange (6) mit dem Einstellknopf (2) wirksam macht, wobei zum Anpassen der Arbeitslänge der Stange (6) die Schraubeinrichtungen (11) der Verbindungsplatten (12, 12a) mit dem Gewinde (10) der Stange (6) zusammenwirken,
- Drehen des Einstellknopfs (2), bis die gewünschte Arbeitslänge der Stange (6) erreicht ist.

14. Zwischen einer ersten und zweiten Trägerstruktur angeordnetes Konstruktionselement, **dadurch gekennzeichnet, dass** es von mindestens einem Halteelement (1) nach einem der Ansprüche 1 bis 12 zwischen den Trägerstrukturen gehalten wird.

## Claims

1. Holding element (1) comprising a rod (6) in which one portion of the length, referred to as working length, corresponds to the thickness of a construction element to be held by said element (1), with the rod (6) having a thread (10), the holding element (1) comprising an adjusting knob (2) of substantially circular shape and removably receiving the rod (6) in a median recess (9), the adjusting knob (2) being provided with securing means (12, 12a) for securing to the rod (6) comprising screwing means (11) engaging with the thread (10) of the rod (6) in order to adjust the working length of the rod (6) by screwing or unscrewing the adjusting knob (2) around the rod (6), with the holding element being **characterised in that** the securing means comprise two securing plates (12, 12a) housed in the adjusting knob (2) of the holding element and extending in an opposite direction from one another along an axis of displacement along a diameter of the adjusting knob (2), with each plate (12, 12a) being mobile between, on the one hand, a first position wherein its inner end portion (13) is on the passage of the recess (9) and its outer end laterally protrudes from the adjusting knob (2), with this first position being taken when no action by an installer is carried out on its outer end and, on the other hand, a second position wherein its inner end portion (13) releases the passage of the recess (9) when an action is exerted on its outer end by the installer.

2. Holding element (1) as claimed in the preceding claim, wherein the outer end of each securing plate (12, 12a) comprises a button (15) that can be actuated by the installer in order to place the plate (12, 12a) in its second position.

3. Holding element (1) according to any of the two preceding claims, wherein each securing plate (12, 12a) is returned to the first position by a means for returning (18) to position.

4. Holding element (1) as claimed in the preceding claim, wherein the means for returning (18) to position of a plate (12, 12a) is borne by the other plate (12, 12a) and inversely, with this means of return being in the form of a return blade (18).

5. Holding element (1) according to any of the four preceding claims, wherein the inner end portion (13) of each plate (12, 12a) bears the screwing means (11), with these screwing means (11) engaging with the thread (10) of the portion opposite the rod (6) inserted into the recess (9) of the adjusting knob (2).

6. Holding element (1) as claimed in the preceding claim, wherein the portions of the inner end (13) of the securing plates (12, 12a) have cavities (16) bearing the screwing means (11) on their inner wall and surrounding at least partially the portion of the rod (6) opposite housed in the recess (9).

7. Holding element (1) according to any of claims 1 to 6, wherein the screwing means are in the form of superimposed claws (11) of which the dimensions and the spacing correspond to the dimensions of the pitch of the thread (10) of the rod (6).

8. Holding element (1) as claimed in the preceding claim, wherein the claws (11) extend in the form of superimposed arcs of circles by being offset with respect to the axis of displacement of the securing plates (12, 12a).

9. Holding element (1) as claimed in the preceding claim, wherein the middle of the arc of circle associated with each claw is offset 45° with respect to the axis of displacement of the securing plates (12, 12a).

10. Holding element (1) as claimed in any preceding claim, wherein the end of the rod (6) that farthest from the adjusting knob (2) comprises means for clipping (8, 17) with a first support structure.

11. Holding element (1) as claimed in the preceding claim, wherein the means for clipping (8, 17) are formed of a spacer (8) penetrating into the first support structure, with the spacer (8) comprising a groove (17) receiving a portion of the first support structure via clipping.

12. Holding element (1) as claimed in any preceding claim, wherein the adjusting knob (2) comprises a body (2a) housing the securing plates (12, 12a) of the rod (6) with the adjusting knob (2), with the body (2a) being covered with a cap (4) on its face opposite the portion of the length of the rod (6) referred to as working length, with a spacing (5) being provided between the body (2a) and the cap (4), said spacing (5) being used for the clipping with a second support structure.

13. Method of removably mounting of a rod (6) provided with a thread (10) in an adjusting knob (2) and adjusting the adjusting knob (2) with respect to the rod (6) in order to obtain a desired working length of the rod (6) in a holding element (1) as claimed in any preceding claim, with the method comprising the following steps:
- action of an installer exerted on the outer end of the securing plates (12, 12a) in order to render them inoperable as securing means of the rod (6) with the adjusting knob (2),
- insertion of a portion of the rod (6) into the adjusting knob (2),
- stoppage of the action of the installer rendering operable the securing plates (12, 12a) as securing means of the rod (6) with the adjusting knob (2), with the screwing means (11) of the securing plates (12, 12a) engaging with the thread (10) of the rod (6) for the adjustment of the working length of the rod (6),
- rotation of the adjusting knob (2) until the desired working length of the rod (6) is obtained.

14. Construction element inserted between the first and second support structures, **characterised in that** it is held between the support structures by at least one holding element (1) according to any of claims 1 to 12.
